# EUROPÄISCHE PATENTSCHRIFT

(11) **EP 3 008 997 B1**
(45) Veröffentlichungstag und Bekanntmachung des Hinweises auf die Patenterteilung: **29.11.2017**
(21) Anmeldenummer: 15020169.7
(22) Anmeldetag: 21.09.2015
(51) Int. Cl.: A01M 21/04, B05B 9/00

(54) **HANDSPRITZE**
HAND-OPERATED SPRAYER
PULVERISATEUR MANUEL

(30) Priorität: 14.10.2014 DE 102014014971
(43) Veröffentlichungstag der Anmeldung: 20.04.2016
(73) Patentinhaber: Scheppach Fabrikation von Holzbearbeitungsmaschinen GmbH, 89335 Ichenhausen (DE)
(72) Erfinder: Arlt, Gerhard, 86850 Fischach, OT Reitenbuch (DE)
(74) Vertreter: Munk, Ludwig

(56) Entgegenhaltungen:
- WO-A1-94/26102
- DE-U1-202009 015 831
- US-A1- 2014 053 453

## Beschreibung

Die Erfindung betrifft eine Handspritze gemäß dem Oberbegriff des Anspruchs 1.

Bekannte Pflanzenschutzgeräte, dienen dazu, Pflanzenschutzmittel auszubringen. Zum Einsatz rund um das Haus und im Garten gibt es beispielsweise Handspritzen mit einem Fassungsvermögen von wenigen Litern, welche in der Hand oder auf dem Rücken getragen werden können. Herkömmliche Pflanzenschutzmittel, etwa Fungizide, Insektizide und Herbizide, haben aber den Nachteil, dass sie oft nicht nur für die bekämpften Schädlinge, sondern auch für Nützlinge und die Umwelt insgesamt giftig sind.

Unter den Begriff Pflanzenschutz, bei dem eine Nutzpflanzung gegen Ertragsverluste geschützt werden soll, etwa mittels Herbizid gegen Unkraut, fällt auch die reine Unkrautbekämpfung, bei der manchmal nicht der Schutz von Nutzpflanzen im Vordergrund steht, sondern die Vernichtung von Unkraut aus optischen oder sonstigen Gründen, etwa der Beseitigung von griftigen Neophyten.

Für den großflächigen Einsatz etwa seitens Städten und Gemeinden sind Unkrautbekämpfungsvorrichtungen bekannt, die zur Bekämpfung von Unkraut auf Wegen und Plätzen heißes, flüssiges Wasser anstatt Pflanzengiften einsetzen. Dabei wird der stationäre Teil des Systems, der aus einem in der Regel unter Druck setzbaren Wassertank und einem heizöl- oder dieselbetriebenen Brenner oder Durchlauferhitzer besteht, auf einen Klein-LKW, Pickup oder einen Anhänger eines Schleppers oder LKWs montiert. Dabei wird das damit erzeugte Heißwasser über eine Ausbringungslanze bzw. Ausbringungseinheit auf die zu behandelnden Flächen ausgebracht. Es gibt sowohl von Hand geführte Handlanzen als auch fahrzeugmontierbare Ausbringungseinheiten. Beispiele für derartige Vorrichtungen sind die Wave Heißwassersysteme der Fa. Wave Europe B.V. Matendijk 7, 6733 Wekerom (Gemeinde Ede), Niederlande, siehe www.waveunkrautbekaempfung.de, die GEYSIR Heißwassergeräte der Fa. GEYSIR Thermische Flächenreinigung, Parkstraße 100 39326 Loitsche-Heinrichsberg, Deutschland, siehe www.geysir-pur.de, und die ELMOTherm Heißwasser- / Schaumgeräte der Fa. ELMO GmbH Am Stadtwalde 15, 48432 Rheine, Deutschland, siehe www.flaechenpflege.de.

Allgemein ist die mit heißem, flüssigen Wasser arbeitende thermische Unkrautbekämpfung eine umweltfreundliche Alternative zum Ausbringen von Herbiziden. Thermische Unkrautbekämpfung mit heißem Wasser basiert auf der Übertragung thermischer Energie auf die Pflanze, wodurch die Zellstruktur sowie pflanzliche Eiweiße zerstört werden. Flüssiges Wasser hat eine hohe spezifische Wärmekapazität von ca. 4200 J/(kg·K). Dies bedeutet, dass Wasser im Vergleich zu anderen Flüssigkeiten relativ viel Energie aufnehmen kann, ohne dass sich die Temperatur dabei deutlich erhöhen würde. Dadurch wird auch beim Abkühlen ebenso viel Energie wieder frei.

Gegenüber anderen thermischen Unkrautbekämpfungsverfahren, etwa dem Abflammen oder dem Arbeiten mit Wasserdampf hat der Einsatz von flüssigem Heißwasser den Vorteil, dass flüssiges Wasser anders als Heißdampf oder heiße Luft bedingt durch die Schwerkraft nach unten strömt und daher die Pflanze und auch die Wurzeln gut erreicht, während das spezifische Gewicht von Heißdampf oder heißer Luft durch die wärmebedingte Ausdehnung geringer ist als die kühlere Umgebungsluft und so nach oben steigt. Zudem ist Luft ein sehr schlechter Wärmeträger. Diese Vorteile kommen besonders im Heim- und Gartenbereich zum Tragen, wo der Verbraucher dem Einsatz von Umweltgiften besonders kritisch gegenüber steht.

Dazu ist aus der deutschen Gebrauchsmusterschrift DE 20 2009 015 831 U1 schon eine Gartenspritze zur Unkrautbekämpfung bekannt, mit einem Wasserbehälter zum Speichern von erhitztem Wasser, welcher eine oberseitige Einfüllöffnung zum Einfüllen des flüssigen Wassers und eine mit einer Düsenanordnung zum Verspritzen des vorher erhitzten Wassers verbundene, unterseitige Auslassöffnung hat, an der ein zu einer Spritze führender Schlauch angeschlossen ist. In den Wasserbehälter ist eine elektrisch betriebenene Wassererhitzungseinheit integriert. Ferner ist zur Druckerhöhung eine in die Einfüllöffnung einschraubbare Luftpumpe vorgesehen, welche die Einfüllöffnung dann druckdicht verschließt.

Hiervon ausgehend liegt der vorliegenden Erfindung daher die Aufgabe zu Grunde, eine solche mit flüssigem, heißem Wasser arbeitende Handspritze für den Haus- und Gartengebrauch, die ohne Einsatz von Spritzgiften auskommt, so weiterzubilden, dass sich eine bequemere Handhabung ergibt.

Diese Aufgabe wird durch die Merkmale des Anspruchs 1 gelöst.

Die Erfindung betrifft eine Handspritze zur Unkrautbekämpfung im Garten, Hof und auf Wegen, mit einem Wasserbehälter zum Speichern von erhitztem Wasser, welcher eine verschließbare Einfüllöffnung zum Einfüllen des flüssigen Wassers und eine mit einer Düsenanordnung zum Verspritzen des vorher erhitzten Wassers verbundene Auslassöffnung hat, mit einer elektrisch betriebenen, an dem Wasserbehälter angeordneten Wassererhitzungseinheit zur Erhitzung des Wassers, und mit einer Druckerhöhungseinrichtung zum Erhöhen des Drucks in dem zu verspritzenden Wasser, also zur Druckerhöhung in dem Wasserbehälter bei verschlossener Einfüllöffnung bzw. zum Erhöhen des Drucks des aus dem einfüllöffnungsseitig verschlossenen Wasserbehälter zu verspritzenden Wassers. Erfindungsgemäß ist die Druckerhöhungseinrichtung als elektrisch angetriebene Pumpe ausgebildet und für eine autarke Arbeitsweise als Stromversorgung der Wassererhitzungseinheit und der Druckerhöhungseinrichtung eine Batterie- bzw. Akkumulatorversorgung vorgesehen, wobei in einem den Wasserbehälter umgebenden Gehäuse auch die Wassererhitzungseinheit, die Stromversorgung mit Akkumulator, Laderegler und Netzanschluss, und die Pumpe aufgenommen sind und zum Verschließen der Einfüllöffnung ein Schraubdeckel vorgesehen ist, und wobei die Pumpe als druckerhöhende Förderpumpe am Auslass des Wasserbehälters vorgesehen ist, um den Druck in dem zu verspritzenden Wasser zu erhöhen, und eine Druckaufbauverhinderungseinrichtung der Handspritze ein Einschalten der Pumpe nur dann erlaubt, wenn die Wassererhitzungseinheit ausgeschaltet ist. Dabei sind die Wassererhitzungseinheit und die Druckerhöhungseinrichtung der Handspritze elektrisch betrieben, wofür für eine autarke Arbeitsweise eine Batterie bzw. Akkumulatorversorgung vorsehen ist. Die Pumpe kann dabei beispielsweise als Luftpumpe zum Erhöhen des Luftdrucks in dem Wasserbehälter aber erfindungsgemäß als druckerhöhende Förderpumpe am Auslass des Wasserbehälters vorgesehen sein, um den Druck in dem zu verspritzenden Wasser zu erhöhen.

Die Wassererhitzungseinheit ist auch in ein den Wasserbehälter umgebendes Gehäuse eingebaut. In dem Gehäuse ist auch die Stromversorgung mit Akkumulator, Laderegler und Netzanschluss aufgenommen. Auch die als Druckerhöhungseinrichtung dienende Pumpe ist in dem Gehäuse untergebracht. Zum Verschließen der Einfüllöffnung dient ein Schraubdeckel. Mit der erfindungsgemäßen Handspritze gelingt es, die Vorteile der heißwassergestützten, thermischen Unkrautbekämpfung in einer relativ einfach und kostengünstig aufgebauten Vorrichtung für den Hausgebrauch umzusetzen, die dem Endverbraucher nicht zu teuer ist und die darüber hinaus so einfach bedienbar ist, wie es Endverbrauchergeräte erfordern.

Vorteilhafte Weiterbildungen der Erfindung sind Gegenstand der Unteransprüche. So ist es im Sinne eines geringen Energiebedarfs und einer erhöhten Zeitspanne, in der die Handspritze ohne Nachheizen einsatzbereit ist, vorteilhaft, wenn der Wasserbehälter wärmeisoliert ist, etwa in Form einer doppelwandigen Thermoskanne aus Edelstahl oder dergleichen. Der Wasserbehälter kann zur Wärmeisolierung doppelwandig mit einem zwischen den beiden Wänden eingeschlossenen Zwischenraum ausgebildet sein, wobei der Zwischenraum weiter bevorzugt evakuiert ist. Ferner könnte der Wasserbehälter auf seiner zum Wasser hin gewandten Seite verspiegelt oder anderweitig beschichtet ist. Ferner könnte der Wasserbehälter außenseitig mit einer Isolierschicht bezogen sein, beispielsweise aus Kunststoff, wie PU-Schaum oder dergleichen. Bei einem zylindrischen Wasserbehälter könnte auch nur die zylindrische Außenwand mit der z.B. in Form einer Kunststoffschaummatte ausgebildeten Isolierschicht überzogen sein.

Dabei kann in den Boden des Wasserbehälters eingelassen oder unterhalb davon eine als Wassererhitzungseinheit dienende Heizplatte oder Heizspirale angebracht sein. -Denn zur Vermeidung von Unfällen und wegen eines platzsparenden Aufbaus ist es vorteilhaft, wenn die Wassererhitzungseinheit in das den Wasserbehälter umgebende Gehäuse integriert ist.

Weiterhin vorteilhaft ist zur Steuerung der Wassererhitzungseinheit auf eine gewünschte Wassertemperatur ein Thermostat in dem Wasserbehälter angeordnet, der die Wassererhitzungseinheit beispielsweise so steuert, dass das Wasser im Wasserbehälter zum Kochen gebracht wird, bevor die Wassererhitzungseinheit abschaltet. Der Thermostat kann auch mit einer Temperatureinstellung versehen sein, so dass eine andere gewünschte Wassertemperatur als 100°C voreingestellt werden kann.

Insbesondere im Hinblick auf eine elektronische Steuerung kann alternativ auch ein Thermometer bzw. ein Temperaturfühler vorgesehen sein, welcher das Erreichen einer gewünschten Aufheiztemperatur (z.B. 100° C) in dem Wasserbehälter meldet, so dass die Steuerung die Stromzufuhr zur Wassererhitzungseinheit im Ansprechen darauf abschalten kann.

Vorteilhaft ist daher eine Steuereinheit vorgesehen, vorzugsweise ein Mikrocontroller, welcher die Pumpe und die Wassererhitzungseinheit im Ansprechen auf Bedienereingaben einerseits und andererseits unter Überprüfung von Maschinenparametern wie z.B. der per Thermometer bzw. Temperaturfühler erfassten Aufheiztemperatur in dem Wasserbehälter steuert.

Was die Überprüfung von Maschinenparametern betrifft ist eine Druckaufbauverhinderungseinrichtung vorgesehen bzw. von der Steuereinheit umfasst, welche ein Einschalten der Pumpe nur dann erlaubt, wenn die Wärmeerhitzungseinheit ausgeschaltet ist, vorzugsweise nur dann, wenn der Heizvorgang auf eine gewünschte Temperatur abgeschlossen ist. Weiterhin vorteilhaft ist eine Heizverhinderungseinrichtung vorgesehen ist, welche ein Einschalten der Wassererhitzungseinheit verhindert, falls der Wasserbehälter nicht befüllt ist.

Vorteilhaft ist ein beispielsweise kapazitiver Füllstandsensor vorgesehen, wobei die Steuereinheit, bzw. deren Heizverhinderungseinrichtung bei Erfassen einer fehlenden Befüllung einen Betrieb der Wassererhitzungseinheit verhindert. Ferner vorteilhaft ist eine Heizerfassungseinrichtung vorgesehen, welche erfasst, ob ein Stromkreis der Wassererhitzungseinheit geschlossen ist, und/oder ob ein Steuerbefehl "HEIZUNG AN" in Kraft ist, wobei die Druckaufbauverhinderungseinrichtung bei Erfassen eines Heizbetriebs einen Betrieb der Pumpe verhindert.

Die Steuereinheit kann dann eine relativ einfach gestaltete, von dem Mikrocontroller abzuarbeitende Programmlogik umfassen, welche periodisch eine IF-Schleife durchläuft und dort abfragt, ob der Steuerbefehl "HEIZUNG AN" gesetzt ist und, falls ja, die Inbetriebnahme der Pumpe verhindert, d.h. die Annahme des Steuerbefehls "PUMPE AN" verweigert.

Gemäß einer weiteren vorteilhaften Weiterbildung der erfindungsgemäßen Handspritze kann der Wasserbehälter zudem eine Überdruckvermeidungseinrichtung auf, um sicherzustellen, dass es nicht zu Unfällen kommt. Mit einfachen Mitteln realisierbar ist es dabei, wenn die Überdruckvermeidungseinrichtung so ausgebildet ist, dass sie den Betrieb der Wassererhitzungseinheit bei geschlossener Einfüllöffnung verhindert, um einem unkontrollierten Überdruck im Wasserbehälter vorzubeugen. Dazu kann die Überdruckvermeidungseinrichtung einen oberseitig am Wasserbehälter angebrachten Stift aufweist, der beim Aufschrauben der Druckerhöhungseinrichtung auf die mit einem Gewinde versehene Einfüllöffnung nach unten gedrückt wird und mit einem AUS-Schalter für die Stromversorgung zusammenwirkt, um die Stromversorgung zu unterbrechen, solange die Einfüllöffnung nicht geschlossen ist. Es wäre aber auch denkbar, die Überdruckvermeidungseinrichtung an den vorstehend erwähnten Thermostaten oder einen im Wasserbehälter angeordneten Druckmesser zu koppeln.

Als Oberfläche zur Eingabe der Bedienereingaben für die Steuereinheit können beispielsweise verschiedene Schaltknöpfe vorgesehen sein, wie z.B. ein ein AUS-Schalter für die Stromversorgung, über der die Stromversorgung AN bzw. AUS geschaltet werden kann. Neben dem AUS-Schalter kann eine Bedieneinheit zwei Schaltknöpfe zum Ein-/Ausschalten der Pumpe und der Wassererhitzungseinheit aufweisen. Ein Touchscreen wäre ebenfalls denkbar. Zur Überwachung der Betriebszustände durch den Bediener ist ferner vorteilhaft eine von der Steuereinheit gesteuerte Anzeigeeinheit vorgesehen, beispielsweise in Form von Farb-LEDs, die den Betriebszustand (AN/AUS) der Wassererhitzungseinheit und der Pumpe anzeigen, sowie einer gemultiplexten Strichbalkenanzeige der erfassten Temperatur im Wasserbehälter, welche beispielsweise auch einen Fehler (LEER) anzeigen könnte. Bedienereinheit und Anzeigeeinehit könnten in einer gemeinsamen Schalttafel am den Wasserbehälter umgebenden Gehäuse angebracht sein.

Weiterhin kann die Handspritze eine Handlanze aufweisen, die über einen Druckschlauch an die Auslassöffnung das Wasserbehälters angeschlossen ist, wobei an der Handlanze ein Betätigungsgriff angebracht ist, über den ein Sperrventil zwischen einer Freigabestellung und einer Sperrstellung betätigbar ist, welches einen Durchfluss durch die Auslassöffnung, den Druckschlauch und eine an der Handlanze vorgesehene Düsenanordnung freigibt oder sperrt.

Schließlich kann die Handspritze vorteilhaft mit einem fahrbaren Wasserbehälter ausgestattet sein, etwa indem ein Handwagen vorgesehen ist, auf dem der Wasserbehälter fahrbar aufgenommen ist, oder indem an dem den Wasserbehälter einschließenden Gehäuse Räder und zumindest ein Handgriff, z.B. nach Art eines Rasenmähers in Form einer Griffgabel, angebracht sind.

Im Folgenden wird anhand der beiliegenden Zeichnungen eine Ausführungsform der vorliegenden Erfindung beschrieben. Es zeigen:
- Figur 1: eine Explosionsdarstellung einer Handspritze gemäß einer Ausführungsform der Erfindung;
- Figur 2: eine Teilschnittansicht der in Figur 1 gezeigten Handspritze;
- Figur 3: eine Einzeldarstellung einer Bedien- und Anzeigeeinheit der in den Figuren 1 und 2 gezeigten Handspritze.

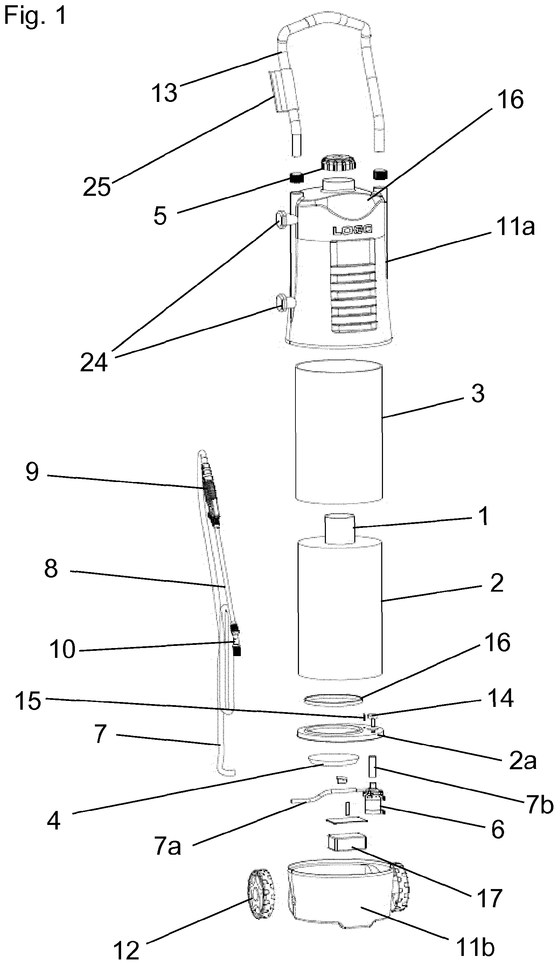

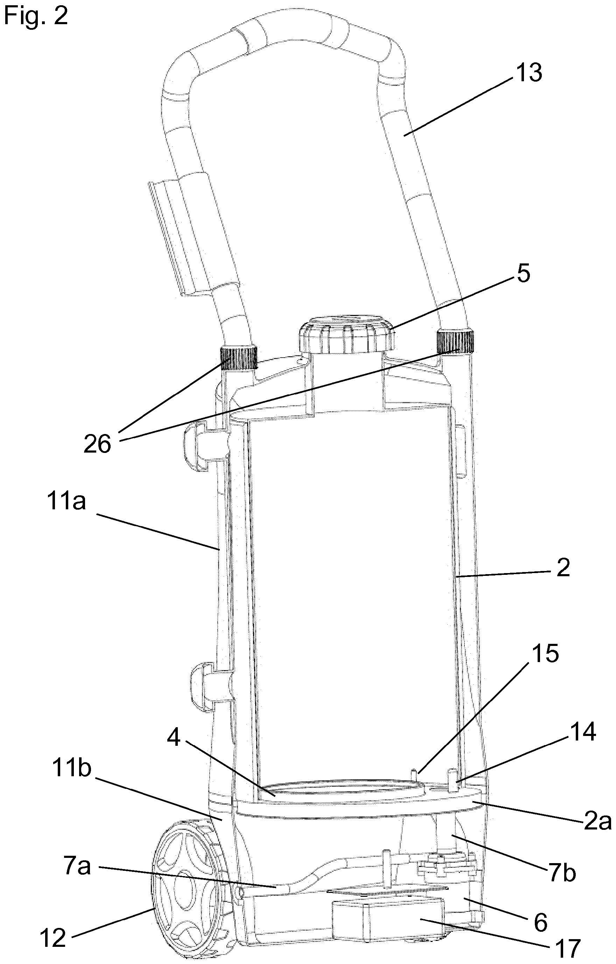

Die in den Figuren 1 und 2 insgesamt gezeigte Handspritze dient zur Unkrautbekämpfung im Garten, im Hof und auf Wegen, ist also zum Mitführen durch eine Person für den kleinflächigen Einsatz ausgebildet.

Die Handspritze weist dabei ein aus einem Oberteil 11a und einem Unterteil 11b bestehendes Gehäuse 11a, 11b auf, welches mit zwei Rädern 12 und einer Griffgabel 13 versehen als fahrbarer Handwagen ausgebildet ist. Die beiden Holme der Griffgabel 13 stecken dabei mit ihrem freien Enden in entsprechenden Aufnehmen im Gehäuseoberteil 11a und sind dort mit Klemmmuffen 26 höhenverstellbar fixiert.

In dem Gehäuse 11a, 11b ist ein umfangsseitig mit einer Isoliermatte 3 überzogener, zylindrischer Wasserbehälter 2 untergebracht, der oberseitig eine mit einem Schraubdeckel 5 verschließbare Einfüllöffnung 1 aufweist.

In eine an die zylindrische Umfangswand des Wasserbehälters angeschweißte Bodenplatte 2a ist dabei über einen Gummidichtring 16 eine als Wassererhitzungseinheit 4 dienende, Elektroheizplatte 4 eingelassen. An der Bodenplatte 2a ist ferner ein Füllstandsensor 15 angebracht, der erfasst, ob sich Wasser im Wasserbehälter 2 befindet, sowie ein Temperaturfühler 14 , welcher die Temperatur des Wassers im Wasserbehälter 2 erfasst.

Im Unterteil 11b des Gehäuses 11a, 11b ist unterhalb des Wasserbehälters 2 ferner eine elektrisch betriebene Förderpumpe 6 angeordnet, die als Druckerhöhungseinrichtung 6 zum Erhöhen des Drucks des den Wasserbehälter 1 verlassenden Wassers dient.

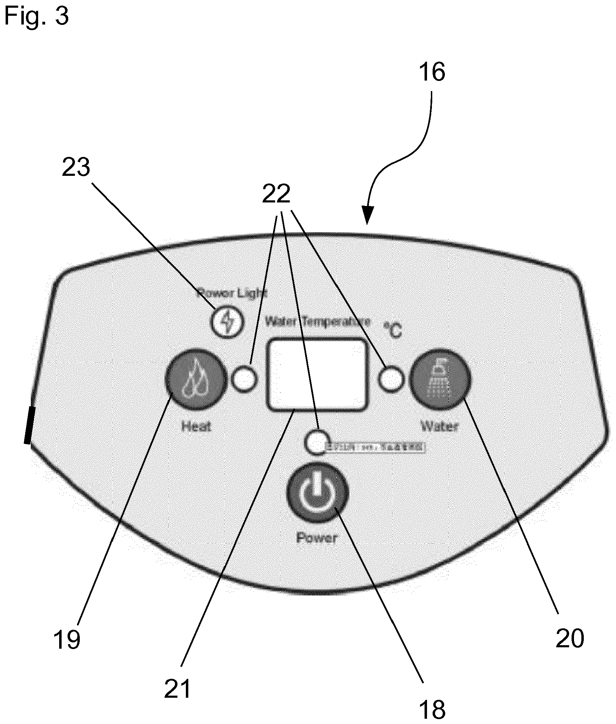

Eine im Einzelnen der Figur 3 zu entnehmende Bedien- und Anzeigeeinheit 16 ist oberseitig neben der Einfüllöffnung 1 in das Gehäuse 11a, 11b integriert. Die Bedien- und Anzeigeeinheit 16 weist drei Tastschalter auf, einen AUS-Schalter 18 zum An- und Ausschalten einer insgesamt mit Bezugsziffer 17 bezeichneten Stromversorgung der Handspritze, einen Schalter 19 zum An- und Ausschalten der Wassererhitzungseinheit 4, sowie einen Schalter 20 zum An- und Ausschalten der Pumpe 6. Die Bedien- und Anzeigeeinheit 16 weist ferner drei Status-LEDs 22 auf, die signalisieren, ob die Stromversorgung 17 angeschaltet ist, ob die Wassererhitzungseinheit 4 in Betrieb ist und/oder ob die Pumpe 6 arbeitet. Weiterhin ist ein Display 21 vorgesehen, auf dem die im Wasserbehälter 2 erfasste Temperatur per Strichbalkenanzeige angezeigt wird, sowie ein Ladezustandslicht 23, welches einen kritischen Ladezustand einer Akkumulatoreinheit der Stromversorgung 17 anzeigt.

Nicht dargestellt ist eine beispielsweise rückseitig an der als Schalttafel ausgebildeten Bedien- und Anzeigeeinheit 16 angebrachte Steuereinheit mit einem Mikrocontroller, welcher eine die Stromversorgung 17, die Wassererhitzungseinheit 4 die Pumpe 6 und die Anzeigen 21, 22, 23 der Bedien-und Anzeigeeinheit 16 im Ansprechen auf Bedienereingaben an den Bedienelementen 18, 19, 20 und an den Sensoren 14, 15 erfassten Maschinenparametern steuernde Programmlogik abarbeitet.

Die Stromversorgung 17 der Wassererhitzungseinheit 4, der Pumpe 6, der Bedien-und Anzeigeeinheit 16 und der Steuereinheit weist dabei zum Einen die in einem Akkufach angeordnete Akkumulatoreinheit auf, aus Gewichtsgründen vorzugsweise mit Lithium-Ionen-Batterie, welche eine hohe Ladungsdichte aufweisen. Vorzugsweise kann auch ein Ladegerät bzw. Laderegler in dem Gehäuse 11a, 11b angebracht sein, dessen Netzanschluss an der Außenseite des Gehäuses 11a, 11b herausgeführt ist, so dass das Laden des Akkus alleine mittels Netzstecker und Stromkabel erfolgen kann. Alternativ könnte der Akku zum Laden auch in ein externes Ladegerät entnehmbar sein.

Der Wasserbehälter 2 weist ferner eine bodennahe Auslassöffnung auf, an der ein zur Pumpe 6 führendes Auslassrohr 7b angeschlossen ist. Die Pumpe 6 ist auslassseitig wiederum mit einem gehäuseinternen Druckschlauchabschnitt 7a verbunden, an den ein zu einer Handlanze 8 führender, gehäuseexterner Druckschlauchabschnitt 7 anschließt. Der Auslass der Handlanze 8 wird dabei von einer Düsenanordnung 10, im dargestellten Beispiel einer einzigen Düse 10 gebildet. An der Handlanze 8 ist des Weiteren ein Betätigungsgriff 9 angebracht, über den ein Sperrventil zwischen einer Sperrstellung und einer Freigabestellung betätigbar ist, welches einen Wasserdurchfluss durch die Auslassöffnung, den Druckschlauch und die Düsenanordnung 10 freigibt oder sperrt.

Zum Betrieb der Handspritze wird zunächst Wasser über die Einfüllöffnung 1 in den Wasserbehälter 2 eingefüllt. Anschließend wird das Wasser mit der Heizplatte 4 zum Kochen gebracht, welches dann per Pumpe 6 verspritzt werden kann. Um einen unkontrollierter Überdruck in dem wärmeisolierten Wasserbehälter 1 zu vermeiden ist ein Betrieb der Pumpe von der Programmlogik der Steuereinheit aber nur dann gestattet, wenn die Wassererhitzungseinheit 4 nicht in Betrieb ist. Dies kann von der Programmlogik beispielsweise erfasst werden, indem bei Einschalten der Wassererhitzungseinheit 4 ein entsprechendes Kennzeichen gesetzt wird, welches beim Ausschalten der Wassererhitzungseinheit 4 dann wieder gelöscht wird und indem dann periodisch abgefragt wird, ob das Kennzeichen gesetzt ist oder nicht.

Nachdem der Heizvorgang beendet ist, lässt sich die Pumpe 6 einschalten, so dass durch diese das erhitzte Medium unter Druckerhöhung über den Druckschlauch 7 zur Handlanze 8 befördert wird. Wird der Betätigungsgriff 9 gedrückt, gelangt das erhitzte Medium zur Düse 10 und wird dort zerstäubt und verspritzt.

Der Wasserbehälter 2 kann dabei als Edelstahltank ausgebildet sein und das Gehäuse 11a, 11b als Kunststoffgehäuse, an dem die Räder 12 und ein nach Art eines Rasenmähers ausgebildeter, als Handgriff für den Bediener dienender Bügel 13 angebracht sind. Weiterhin kann an dem Griffbügel 13 eine Halterung 24 für die Handlanze 8 angebracht sein, um die Handlanze während des Verfahrens der Handspritze am Gehäuse zu haltern. Weiterhin kann an dem Gehäuse 11a, 11b eine Kabelaufwicklung 25 für den Druckschlauch 7 und/oder das Stromversorgungskabel vorgesehen sein.

Selbstverständlich sind Abweichungen von den beschriebenen Ausführungsformen und Weiterbildungen der Erfindung möglich, ohne den Grundgedanken der Erfindung zu verlassen.

Sol kann die Auslassdüse an der Handlanze einstellbar ausgeführt sein, so dass sich die Strahlbreite des Mediums verstellen lässt, um Unkraut gezielt mit dem erhitzten Medium zu behandeln.

Die Handspritze bzw. ihr Wasserbehälter könnte anstatt fahrbar oder ergänzend dazu tragbar mit entsprechenden Tragegurten ausgebildet sein, oder auch stationär mit einem entsprechend langen Druckschlauch.

Anstatt für Wasser könnte die Handspritze auch für ein anderes geeignetes Medium ausgelegt werden. Selbstverständlich wäre es ebenso denkbar, dem zu erhitzenden Wasser ein Herbizid, Fungizid oder anderes Pflanzenschutzmittel beizumengen, sofern dieses für eine Temperatur von bis zu 100°C geeignet ist. Andererseits wäre es auch möglich, an der Handspritze eine separate Herbizidkammer und eine Dosiervorrichtung anzubringen, über welche sich dem Heißwasser an der Düse der Handlanze oder dem ausgepritzen Heißwasserstrahl eine geeignete Rate Herbizid beimischen ließe.

Bei einer fahrbaren Handspritze wäre es darüber hinaus denkbar, auch für den Fahrbetrieb einen elektromotorischen Antrieb vorzusehen, der dann auch über die Stromversorgung mitversorgt werden könnte.

Schließlich wäre es auch denkbar, den Wasserbehälter als Druckkessel zu gestalten, um so nicht nur die Reichweite des Spritzstrahls zu erhöhen, sondern um der Handspritze auch andere Einsatzzwecke zu ermöglichen, etwa als Hochdruckreiniger mit integrierter Heißwasserbereitung.

## Patentansprüche

1. Handspritze zur Unkrautbekämpfung im Garten, Hof und auf Wegen, welche mit flüssigem, heißem Wasser arbeitet, mit einem Wasserbehälter (2) zum Speichern von erhitztem Wasser, welcher eine verschließbare Einfüllöffnung (1) zum Einfüllen des flüssigen Wassers und eine mit einer Düsenanordnung zum Verspritzen des vorher erhitzten Wassers verbundene Auslassöffnung hat, mit einer elektrisch betriebenen, an dem Wasserbehälter angeordneten Wassererhitzungseinheit (4) zur Erhitzung des Wassers, und mit einer Druckerhöhungseinrichtung (6) zum Erhöhen des Drucks des zu verspritzenden Wassers, **dadurch gekennzeichnet, dass** die Druckerhöhungseinrichtung (6) als elektrisch angetriebene Pumpe (6) ausgebildet ist und für eine autarke Arbeitsweise als Stromversorgung (17) der Wassererhitzungseinheit (4) und der Druckerhöhungseinrichtung (6) eine Batterie- bzw. Akkumulatorversorgung vorgesehen ist, wobei
in einem den Wasserbehälter umgebenden Gehäuse (11a, 11b) auch die Wassererhitzungseinheit (4), die Stromversorgung (17) mit Akkumulator, Laderegler und Netzanschluss, und die Pumpe (6) aufgenommen sind und zum Verschließen der Einfüllöffnung (1) ein Schraubdeckel (5) vorgesehen ist, und wobei
die Pumpe (6) als druckerhöhende Förderpumpe (6) am Auslass des Wasserbehälters (2) vorgesehen ist, um den Druck in dem zu verspritzenden Wasser zu erhöhen, und eine Druckaufbauverhinderungseinrichtung der Handspritze ein Einschalten der Pumpe (6) nur dann erlaubt, wenn die Wassererhitzungseinheit (4) ausgeschaltet ist.

2. Handspritze nach Anspruch 1, oder 2 **dadurch gekennzeichnet, dass** der Wasserbehälter (2) wärmeisoliert ist, wobei der Wasserbehälter (2) zur Wärmeisolierung insbesondere doppelwandig mit einem eingeschlossenen Zwischenraum ausgebildet und/oder auf seiner zum Wasser hin gewandten Seite verspiegelt oder anderweitig beschichtet ist, und/oder außenseitig mit einer Wärmeisolierschicht (3), insbesondere aus wärmedämmendem Kunststoffschaum überzogen ist.

3. Handspritze nach Anspruch 2, **dadurch gekennzeichnet, dass** der Wasserbehälter (2) in Form einer doppelwandigen Thermoskanne aus Edelstahl oder einem anderen geeigneten Material mit der Einfüllöffnung (1) an seiner Oberseite und der zusätzlichen Auslassöffnung ausgebildet ist, wobei der in der Doppelwand eingeschlossene Zwischenraum (3) evakuiert ist.

4. Handspritze nach Anspruch 1, 2 oder 3, **dadurch gekennzeichnet, dass** die Wassererhitzungseinheit (4) als am Wasserbehälter angeordnete Heizspirale, und/oder als vorzugsweise am Boden oder unterseitig an dem Wasserbehälter (2) angebrachte Heizplatte / (4) ausgebildet ist.

5. Handspritze nach einem der vorhergehenden Ansprüche, **dadurch gekennzeichnet, dass** ein AUS-Schalter (18) für die Stromversorgung (17) vorgesehen ist, über den die Stromversorgung (17) AN bzw. AUS geschaltet werden kann.

6. Handspritze nach einem der vorhergehenden Ansprüche, **dadurch gekennzeichnet, dass** der Wasserbehälter eine Überdruckvermeidungseinrichtung aufweist, welche den Betrieb der Wassererhitzungseinheit bei geschlossener Einfüllöffnung verhindert, um einem unkontrollierten Überdruck im Wasserbehälter vorzubeugen, wobei die Überdruckvermeidungseinrichtung insbesondere einen oberseitig am Wasserbehälter angebrachten Stift aufweist, der beim Aufschrauben der Druckerhöhungseinrichtung auf die mit einem Gewinde versehene Einfüllöffnung nach unten gedrückt wird und mit dem AUS-Schalter für die Stromversorgung zusammenwirkt.

7. Handspritze nach einem der vorhergehenden Ansprüche, **dadurch gekennzeichnet, dass** eine Handlanze (8) über einen Druckschlauch (7) an die Auslassöffnung angeschlossen ist, wobei an der Handlanze (8) ein Betätigungsgriff (9) angebracht ist, über den ein Sperrventil zwischen einer Freigabestellung und einer Sperrstellung betätigbar ist, welches einen Durchfluss durch die Auslassöffnung, den Druckschlauch und eine an der Handlanze (8) vorgesehene Düsenanordnung (10) freigibt oder sperrt.

8. Handspritze nach einem der vorhergehenden Ansprüche, **gekennzeichnet durch** einen Handwagen, insbesondere eine Sackkarre, auf dem bzw. auf der der Wasserbehälter fahrbar aufgenommen ist und/oder durch eine dem Wasserbehälter und die Wärmeisolierung einschließendes Gehäuse (11a, 11b), welches vorzugsweise als Handwagen mit daran angebrachten Rädern (12) und Handgriff (13) ausgebildet ist.

9. Handspritze nach einem der vorhergehenden Ansprüche, **dadurch gekennzeichnet, dass** die Druckaufbauverhinderungseinrichtung ein Einschalten der Pumpe (6) nur dann erlaubt, wenn der Heizvorgang auf eine gewünschte Temperatur abgeschlossen ist.

10. Handspritze nach einem der vorhergehenden Ansprüche, **dadurch gekennzeichnet, dass** eine Heizverhinderungseinrichtung vorgesehen ist, welche ein Einschalten der Wassererhitzungseinheit (4) verhindert, falls der Wasserbehälter (2) nicht befüllt ist.

11. Handspritze nach einem der vorhergehenden Ansprüche, **dadurch gekennzeichnet, dass** ein Temperaturfühler (14) vorgesehen ist, sowie eine Heizabschalteinrichtung, welche bei Erreichen einer gewünschten Aufheiztemperatur von vorzugsweise 100°C die Wassererhitzungseinheit (4) abschaltet.

12. Handspritze nach einem der vorhergehenden Ansprüche 10 oder 11, **dadurch gekennzeichnet, dass** ein Füllstandsensor (15) vorgesehen ist, wobei die Heizverhinderungseinrichtung bei Erfassen einer fehlenden Befüllung einen Betrieb der Wassererhitzungseinheit (4) verhindert.

13. Handspritze nach einem der vorhergehenden Ansprüche 9 bis 12, **dadurch gekennzeichnet, dass** eine Heizerfassungseinrichtung vorgesehen ist, welcher erfasst, ob ein Stromkreis der Wassererhitzungseinheit (4) geschlossen ist, und/oder ob ein Steuerbefehl "HEIZUNG AN" in Kraft bzw. ein Steuerkennzeichen "HEIZUNG AN" gesetzt ist, wobei die Druckaufbauverhinderungseinrichtung bei Erfassen eines Heizbetriebs einen Betrieb der Pumpe (16) verhindert.

14. Handspritze nach einem der vorhergehenden Ansprüche, **dadurch gekennzeichnet, dass** eine Anzeigeeinheit (16) vorgesehen ist, um Betriebszustände der Pumpe und der Wassererhitzungseinheit anzuzeigen, sowie eine Bedieneinheit (16) zum Ein-/Ausschalten der Pumpe und der Wassererhitzungseinheit, wobei die Anzeigeeinheit (16) und die Bedieneinheit (16) insbesondere an den Wasserbehälter bzw. dem Gehäuse (11a, 11b) angebracht sind, und wobei die Stromversorgung (17) mit Akkumulator, Laderegler und Netzanschluss an dem Wasserbehälter angebracht bzw. in dem Gehäuse (11a, 11b) aufgenommen sind.

15. Handspritze nach einem der vorhergehenden Ansprüche, **dadurch gekennzeichnet, dass** eine Steuereinheit vorgesehen ist, vorzugsweise ein Mikrocontroller, welcher die Pumpe (6) und die Wassererhitzungseinheit (4) im Ansprechen auf Bedienereingaben einerseits und unter Überprüfung von Maschinenparametern andererseits steuert, und vorzugsweise die Druckaufbauverhinderungseinrichtung, die Heizverhinderungseinrichtung und/oder die Heizabschalteinrichtung umfasst, insbesondere in Form einer von dem Mikrocontroller abzuarbeitenden Programmlogik.

## Claims

1. A hand sprayer for weed control in gardens, farms, and on paths, operating with liquid hot water and having a water container (2) for storing heated water, which has a closable filling opening (1) for pouring in the liquid water and an outlet opening, which is connected to a nozzle assembly for spraying the previously heated water, having an electrically operated water heating unit (4), arranged on the water container, for heating the water, and having a pressure increasing unit (6) for increasing the pressure of the water to be sprayed, **characterized in that** the pressure increasing unit (6) is designed as an electrically driven pump (6) and, for an autonomous operating mode, a chargeable battery supply is provided as the power supply (17) of the water heating unit (4) and the pressure increasing unit (6), wherein
the water heating unit (4), the pump (6) and the power supply (17) with battery, charge regulator, and network connection, are installed in a housing (11a, 11b) enclosing the water container (2), and wherein
a screw cover (5) for closing the filling opening (1) is provided, and wherein the pump (6) is provided as a pressure-increasing delivery pump at the outlet of the water container, to increase the pressure in the water to be sprayed, and wherein
a pressure build up prevention unit is provided, which only permits the pump (6) to be turned on, when the water heating unit (4) is turned off.

2. The hand sprayer according to Claim 1, or 2 **characterized in that** the water container (2) is thermally insulated, wherein the water container (2), for the thermal insulation, is in particular designed as double-walled having an enclosed intermediate space and/or is mirrored or coated in another manner on its side facing toward the water, and/or is covered on the outer side using a thermal insulation layer (3), in particular made of thermally-insulating plastic foam.

3. The hand sprayer according to Claim 2, **characterized in that** the water container (2) is designed in the form of a double-walled thermos flask made of stainless steel or another suitable material having the filling opening (1) on its upper side and the additional outlet opening, wherein the intermediate space (3) enclosed in the double wall is evacuated.

4. The hand sprayer according to Claim 1, 2, or 3, **characterized in that** the water heating unit (4) is designed as a heating coil arranged on the water container, and/or as a heating plate (4), which is preferably attached on the bottom or lower side on the water container (2).

5. The hand sprayer according to any one of the preceding claims, **characterized in that** an OFF switch (18) for the power supply (17) is provided, via which the power supply (17) can be turned ON or OFF.

6. The hand sprayer according to any one of the preceding claims, **characterized in that** the water container has an overpressure avoidance unit, which prevents the operation of the water heating unit when the filling opening is closed, to avoid uncontrolled overpressure in the water container, wherein the overpressure avoidance unit has a pin attached on the upper side on the water container in particular, which is pressed downward when the pressure increasing unit is screwed onto the filling opening provided with a thread and which interacts with the OFF switch for the power supply.

7. The hand sprayer according to any one of the preceding claims, **characterized in that** a hand lance (8) is connected via a pressure hose (7) to the outlet opening, wherein an actuating handle (9) is attached to the hand lance (8), via which a blocking valve is actuatable between a release position and a blocking position, which releases or blocks a flow through the outlet opening, the pressure hose and a nozzle assembly (10) provided on the hand lance (8).

8. The hand sprayer according to any one of the preceding claims, **characterized by** a handcart, in particular a hand truck, on which the water container is accommodated so it is mobile, and/or by a housing (11a, 11b), which encloses the water container and the thermal insulation, and which is preferably designed as a handcart having wheels (12) and handle (13) attached thereon.

9. The hand sprayer according to any one of the preceding claims, **characterized in that** the pressure buildup prevention unit only permits the pump (6) to be turned on when the heating procedure to a desired temperature is completed.

10. The hand sprayer according to any one of the preceding claims, **characterized in that** a heat prevention unit is provided, which prevents turning on of the water heating unit (4) if the water container (2) is not filled.

11. The hand sprayer according to any one of the preceding claims, **characterized in that** a temperature sensor (14) is provided, as well as a heat shutoff unit, which turns off the water heating unit (4) upon reaching a desired heating temperature, preferably of 100°C.

12. The hand sprayer according to any one of preceding Claims 10 or 11, **characterized in that** a fill level sensor (15) is provided, wherein the heat prevention unit prevents operation of the water heating unit (4) upon detecting a lack of filling.

13. The hand sprayer according to any one of preceding Claims 9 to 12, **characterized in that** a heat detection unit is provided, which detects whether a power circuit of the water heating unit (4) is closed, and/or whether a control command "HEATER ON" is in force or a control identifier "HEATER ON" is set, wherein the pressure buildup prevention unit prevents operation of the pump (16) upon detecting heating operation.

14. The hand sprayer according to any one of the preceding claims, **characterized in that** a display unit (16) is provided, to indicate operating states of the pump and the water heating unit, and also an operating unit (16) for turning the pump and the water heating unit on and off, wherein the display unit (16) and the operating unit (16) are attached in particular on the water container or the housing (11a, 11b), and wherein the power supply (17) having battery, charging regulator, and network terminal is attached to the water container or accommodated in the housing (11a, 11b).

15. The hand sprayer according to any one of the preceding claims, **characterized in that** a control unit is provided, preferably a microcontroller, which controls the pump (6) and the water heating unit (4) in response to operator inputs, on the one hand, and with checking of machine parameters, on the other hand, and preferably comprises the pressure buildup prevention unit, the heating prevention unit, and/or the heating shutoff unit, in particular in the form of a program logic to be processed by the microcontroller.

## Revendications

1. Pulvérisateur à main pour la lutte contre les mauvaises herbes dans le jardin, la cour et sur les chemins, qui travaille avec de l'eau chaude liquide, comprenant un réservoir d'eau (2) pour stocker de l'eau chauffée qui présente une ouverture de remplissage (1) apte à être obturée et destinée à y verser l'eau liquide ainsi qu'une ouverture de sortie reliée à un ensemble de buses pour la pulvérisation de l'eau préalablement chauffée, une unité de chauffage d'eau (4) pour chauffer l'eau qui est actionnée manière électrique et est disposée sur ledit réservoir d'eau, et un dispositif d'augmentation de pression (6) pour augmenter la pression de l'eau à pulvériser, **caractérisé par le fait que** ledit dispositif d'augmentation de pression (6) est réalise en tant que pompe (6) entraînée de manière électrique et que, pour un mode de fonctionnement autarcique, une alimentation par batterie ou bien accumulateur est prévue en tant qu'alimentation en courant (17) de l'unité de chauffage d'eau (4) et du dispositif d'augmentation de pression (6), dans lequel
dans un boîtier (11a, 11b) entourant ledit réservoir d'eau sont logées également ladite unité de chauffage d'eau (4), l'alimentation en courant (17) avec accumulateur, régulateur de charge et raccordement au réseau, ainsi que la pompe (6), et un couvercle fileté (5) est prévu pour fermer ladite ouverture de remplissage (1), et dans lequel
ladite pompe (6) est prévue en tant que pompe d'alimentation (6) augmentant la pression, à la sortie du réservoir d'eau (2) afin d'augmenter la pression dans l'eau à pulvériser, et un dispositif empêchant l'établissement de pression du pulvérisateur à main permet une mise en marche de la pompe (6) que lorsque ladite unité de chauffage d'eau (4) est éteinte.

2. Pulvérisateur à main selon la revendication 1, ou 2 **caractérisé par le fait que** ledit réservoir d'eau (2) est isolé thermiquement, dans lequel, pour l'isolation thermique, le réservoir d'eau (2) est réalisé en particulier à double paroi avec un espace intermédiaire enfermé et/ou est pourvu d'une couche réfléchissante ou revêtu d'une autre manière sur sa face tournée vers l'eau et/ou est revêtu extérieurement d'une couche d'isolation thermique (3), en particulier en mousse de matière plastique thermiquement isolante.

3. Pulvérisateur à main selon la revendication 2, **caractérisé par le fait que** le réservoir d'eau (2) est réalisé sous la forme d'un thermos à double paroi en acier inoxydable ou en un autre matériau approprié, avec l'ouverture de remplissage (1) sur sa face supérieure et l'ouverture de sortie supplémentaire, dans lequel ledit espace intermédiaire (3) enfermé dans la double paroi est évacué.

4. Pulvérisateur à main selon la revendication 1, 2 ou 3, **caractérisé par le fait que** ladite unité de chauffage d'eau (4) est réalisée en tant que spirale de chauffage disposée sur le réservoir d'eau et/ou en tant que plaque chauffante (4) montée de préférence sur le fond ou sur la face inférieure du réservoir d'eau (2).

5. Pulvérisateur à main selon l'une quelconque des revendications précédentes, **caractérisé par le fait qu'**un interrupteur ARRÊT (18) est prévu pour l'alimentation en courant (17), par l'intermédiaire duquel l'alimentation en courant (17) peut être allumée ou bien éteinte.

6. Pulvérisateur à main selon l'une quelconque des revendications précédentes, **caractérisé par le fait que** ledit réservoir d'eau comprend un dispositif empêchant la surpression qui empêche le fonctionnement de l'unité de chauffage d'eau lorsque l'ouverture de remplissage est fermée, afin de prévenir une surpression incontrôlée à l'intérieur du réservoir d'eau, dans lequel ledit dispositif empêchant la surpression présente en particulier une tige qui est montée sur la face supérieure du réservoir d'eau et qui, lorsque le dispositif d'augmentation de pression est vissé sur l'ouverture de remplissage munie d'un filetage, est poussée vers le bas et agit de concert avec l'interrupteur ARRÊT pour l'alimentation en courant.

7. Pulvérisateur à main selon l'une quelconque des revendications précédentes, **caractérisé par le fait qu'**une lance à main (8) est raccordée via un tuyau flexible à pression (7) à l'ouverture de sortie, dans lequel sur ladite lance à main (8) est montée une poignée de commande (9) par le biais de laquelle une soupape d'arrêt peut être actionnée entre une position de libération et une position de blocage, qui libère ou bloque un passage à travers l'ouverture de sortie, le tuyau flexible à pression et un ensemble de buses (10) prévu sur ladite lance à main (8).

8. Pulvérisateur à main selon l'une quelconque des revendications précédentes, **caractérisé par** un chariot à bras, en particulier un diable à sacs, sur lequel le réservoir d'eau est logé mobil, et/ou par un boîtier (11a, 11b) qui entoure le réservoir d'eau et l'isolation thermique et qui, de préférence, est réalisé en tant que chariot à bras comprenant des roues (12) et une poignée (13) montées sur celui-ci.

9. Pulvérisateur à main selon l'une quelconque des revendications précédentes, **caractérisé par le fait que** ledit dispositif empêchant l'établissement de pression ne permet de mettre en marche la pompe (6) que lorsque l'opération de chauffage à une température souhaitée est terminée.

10. Pulvérisateur à main selon l'une quelconque des revendications précédentes, **caractérisé par le fait qu'**un dispositif empêchant le chauffage est prévu qui empêche la mise en marche de l'unité de chauffage d'eau (4) si le réservoir d'eau (2) n'est pas rempli.

11. Pulvérisateur à main selon l'une quelconque des revendications précédentes, **caractérisé par le fait qu'**un capteur de température (14) est prévu, ainsi qu'un dispositif d'arrêt de chauffage qui arrête l'unité de chauffage d'eau (4) lorsqu'une température de chauffage souhaitée de 100 °C de préférence est atteinte.

12. Pulvérisateur à main selon l'une quelconque des revendications précédentes 10 ou 11, **caractérisé par le fait qu'**un capteur de niveau (15) est prévu, dans lequel ledit dispositif empêchant le chauffage empêche un fonctionnement de l'unité de chauffage d'eau (4) lorsqu'une absence de remplissage est détectée.

13. Pulvérisateur à main selon l'une quelconque des revendications précédentes 9 à 12, **caractérisé par le fait qu'**un dispositif de détection de chauffage est prévu qui détecte si un circuit de l'unité de chauffage d'eau (4) est fermé, et/ou si un ordre de commande «CHAUFFAGE EN MARCHE» est en vigueur ou bien un indicateur de commande «CHAUFFAGE EN MARCHE» est mis, dans lequel ledit dispositif empêchant l'établissement de pression empêche un fonctionnement de la pompe (16) lorsqu'un service de chauffage est détecté.

14. Pulvérisateur à main selon l'une quelconque des revendications précédentes, **caractérisé par le fait qu'**une unité d'affichage (16) est prévue afin d'afficher des états de fonctionnement de la pompe et de l'unité de chauffage d'eau, ainsi qu'une unité de manoeuvre (16) destinée à mettre en marche/arrêter la pompe et l'unité de chauffage d'eau, dans lequel ladite unité d'affichage (16) et l'unité de manoeuvre (16) sont montées en particulier sur le réservoir d'eau ou bien sur le boîtier (11a, 11b), et dans lequel l'alimentation en courant (17) avec accumulateur, régulateur de charge et raccordement au réseau sont montés sur le réservoir d'eau ou bien logés à l'intérieur du boîtier (11a, 11b).

15. Pulvérisateur à main selon l'une quelconque des revendications précédentes, **caractérisé par le fait qu'**une unité de commande est prévue, de préférence un microcontrôleur qui commande la pompe (6) et l'unité de chauffage d'eau (4) en réaction à des entrées d'utilisateur d'un côté et en vérifiant des paramètres de machine de l'autre côté, et qui, de préférence, comprend le dispositif empêchant l'établissement de pression, le dispositif empêchant le chauffage et/ou le dispositif d'arrêt de chauffage, en particulier sous forme d'une logique de programme à exécuter par le microcontrôleur.
